(19) Europäisches Patentamt
European Patent Office
Office européen des brevets

(11) EP 3 372 626 B1

(12) **EUROPEAN PATENT SPECIFICATION**

(45) Date of publication and mention of the grant of the patent:
**23.10.2019 Bulletin 2019/43**

(51) Int Cl.:
***C08G 64/20*** *(2006.01)* ***C08G 64/30*** *(2006.01)*

(21) Application number: **17382126.5**

(22) Date of filing: **10.03.2017**

# (54) IONIC CATALYST FOR THE MELT POLYMERIZATION OF POLYCARBONATE AND METHOD OF USING THE SAME

IONENKATALYSATOR ZUR SCHMELZPOLYMERISIERUNG VON POLYCARBONAT UND VERFAHREN ZUR VERWENDUNG DAVON

CATALYSEUR IONIQUE POUR LA POLYMÉRISATION EN FUSION DE POLYCARBONATE ET SON PROCÉDÉ D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.09.2018 Bulletin 2018/37**

(73) Proprietor: **SABIC Global Technologies B.V.**
**4612 PX Bergen op Zoom (NL)**

(72) Inventors:
- **DHAR, Dwairath**
  **562125 Bangalore, Karnataka (IN)**
- **GUNASEKARAN, Sivalingam**
  **562125 Bangalore, Karnataka (IN)**
- **GARCÍA AGUDO, Jorge A**
  **30390 Cartagena (ES)**
- **BOJARSKI, Aaron David**
  **30390 Cartagena (ES)**

(74) Representative: **Balder IP Law, S.L.**
**Paseo de la Castellana 93**
**5a planta**
**28046 Madrid (ES)**

(56) References cited:
**WO-A1-2016/151517 US-B2- 7 858 678**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 372 626 B1

## Description

### BACKGROUND

Polycarbonates are used in a wide variety of fields due to their excellent mechanical properties such as impact resistance as well as heat resistance and transparency. Polycarbonates can be made by melt polymerizing a dihydroxy compound and a carbonate compound in the presence of a catalyst. A quencher can be subsequently added to reduce the activity of the catalyst in the polycarbonate. If the catalyst is unquenched in the polycarbonate composition, it can disadvantageously lead to poor color, reduced molecular weight, or poor rheological properties. Furthermore, residual catalyst in the polycarbonate composition can also interact with additives, detracting from their efficacy. Document WO 2016/151517 relates to a melt polymerization process and the polycarbonate made therefrom, a process of melt polymerizing polycarbonate, comprises forming a catalyst in a mixing unit, wherein the catalyst mixture comprises comprising a dihydroxy compound, a carbonate compound, and a monomer stage catalyst being a quaternary phosphonium compound, in particular tetrabutyl phosphonium acetate.

Improved catalysts for polymerizing melt polycarbonate reactions are desired.

### BRIEF SUMMARY

Disclosed herein is an ionic catalyst for the melt polymerization of polycarbonate, a method of polymerizing polycarbonate, and the polycarbonate made therefrom.

In an embodiment, a process of melt polymerizing a polycarbonate, comprises melt polymerizing a dihydroxy compound and a carbonate precursor to form the polycarbonate in the presence of a catalyst comprising an ionic catalyst of the formula I:

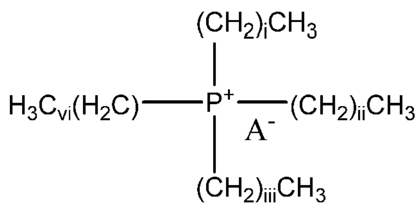

(I)

wherein i + ii + iii + iv is greater than or equal to 16, or 16 to 50, or 20 to 35; i is greater than or equal to ii + 2; and A is an anion.

The above described and other features are exemplified by the following figures and detailed description.

### BRIEF DESCRIPTION OF THE DRAWINGS

Refer now to the figures, which are exemplary embodiments.

FIG. 1 illustrates an embodiment of a process of adding an ionic catalyst;
FIG. 2 is a graphical illustration of the weight percent of reactants with time of Example 1;
FIG. 3 is a graphical illustration of the molecular weight build-up of Examples 11-14;
FIG. 4 is a graphical illustration of the branching formation of Examples 11-14.

### DETAILED DESCRIPTION

The melt polycarbonate process is based on the reaction of a dihydroxy compound and a carbonate precursor in a molten stage. The reaction can occur in a series of reactors where the combined effect of the catalyst, temperature, vacuum, and agitation allows for monomer reaction and removal of reaction by-products to displace the reaction equilibrium and make the polymer chain grow. A common polycarbonate that is made in melt polymerization reactions is that derived from bisphenol A (BPA) via reaction with diphenyl carbonate (DPC). This reaction can be catalyzed by tetra methyl ammonium hydroxide (TMAOH), which can be added in to a catalyst mixture prior to being introduced to a first polymerization unit; and sodium hydroxide (NaOH), which can be added to the first reactor or upstream of the first reactor and after a monomer mixer. As TMAOH is known to degrade at high temperatures, its efficacy in catalyzing the reaction after an initial reaction stage drops precipitously. It was found that unlike most monomer stage catalysts that are unstable at elevated temperatures, for example, that are unstable at temperatures of greater than 220°C, and that are generally inactive in oligomerization stages of melt polymerization, an ionic compound of the formula I:

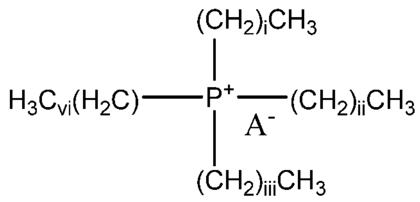

(I)

wherein i + ii + iii + iv is greater than 16 and wherein i is greater than or equal to ii + 2 could act as a catalyst in a melt polycarbonate reaction. The ionic catalyst of formula I is herein referred to as the ionic catalyst. It was surprisingly found that the ionic catalyst actually remains active during oligomerization stages of the melt polymerization, for example, at temperatures of 170 to 285°C. The increased lifetime under the melt polymerization conditions can advantageously allow for the polymerization to be conducted in the absence of an alkali catalyst such as NaOH, while still achieving high molecular weights. As used herein, the alkali catalyst comprises a source of one or both of alkali ions and alkaline earth ions.

It was surprisingly found that the melt polymerizing of polycarbonate could be performed in the presence of the ionic catalyst, for example, wherein the ionic catalyst is the only catalyst present throughout the polymerization. It was further surprisingly discovered that a reduced amount of the ionic catalyst could be used as compared to a corresponding melt polymerization in the presence of typical catalysts such as TMAOH. This discovery is especially surprising as when catalysts such as TMAOH are used, they are used in conjunction with an alkali catalyst.

It was beneficially found that the melt polymerization in the presence of the ionic catalyst could result in a branching level, for example, of less than or equal to 800 parts per million by weight (ppm).

As the ionic catalyst can polymerize the polycarbonate at higher temperatures, it was found that if an alkali catalyst is added, it can be added to a polymerization unit instead of to an oligomerization unit. The melt polymerization can therefore comprise adding the ionic catalyst to a monomer mixing unit and optionally adding an alkali catalyst, for example, to a polymerization unit. It is noted that adding a component to a unit refers to adding the component directly to that unit or just upstream of that unit such that the first unit the component enters is the unit to which the component is added.

"Polycarbonate" as used herein means a polymer having repeating structural carbonate units of formula (1)

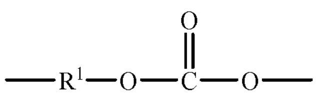

(1)

in which at least 60 percent of the total number of $R^1$ groups contain aromatic moieties and the balance thereof are aliphatic or alicyclic. Each $R^1$ can be a $C_{6-30}$ aromatic group, that is, contains at least one aromatic moiety. $R^1$ can be derived from an aromatic dihydroxy compound; of the formula $HO-R^1-OH$, in particular of formula (2)

$$HO-A^1-Y^1-A^2-OH \qquad (2)$$

wherein each of $A^1$ and $A^2$ is a monocyclic divalent aromatic group and $Y^1$ is a single bond or a bridging group having one or more atoms that separate $A^1$ from $A^2$. One atom can separate $A^1$ from $A^2$. Specifically, each $R^1$ can be derived from a bisphenol of formula (3)

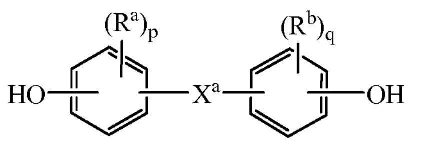

(3)

wherein $R^a$ and $R^b$ are each independently a halogen, $C_{1-12}$ alkoxy, or $C_{1-12}$ alkyl; and p and q are each independently integers of 0 to 4. It will be understood that when p or q is less than 4, the valence of each carbon of the ring is filled by hydrogen. Also in formula (3), $X^a$ is a bridging group connecting the two hydroxy-substituted aromatic groups, where the bridging group and the hydroxy substituent of each $C_6$ arylene group are disposed ortho, meta, or para (specifically para) to each other on the $C_6$ arylene group. The bridging group $X^a$ can be a single bond, -O-, -S-, -S(O)-, $-S(O)_2-$, -C(O)-, or a $C_{1-18}$ organic group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$

organic group can be disposed such that the $C_6$ arylene groups connected thereto are each connected to a common alkylidene carbon or to different carbons of the $C_{1-18}$ organic bridging group. Each p and q can be 1, and $R^a$ and $R^b$ can each be a $C_{1-3}$ alkyl group, specifically methyl, disposed meta to the hydroxy group on each arylene group.

$X^a$ can be a substituted or unsubstituted $C_{3-18}$ cycloalkylidene, a $C_{1-25}$ alkylidene of formula -C($R^c$)($R^d$)- wherein $R^c$ and $R^d$ are each independently hydrogen, $C_{1-12}$ alkyl, $C_{1-12}$ cycloalkyl, $C_{7-12}$ arylalkyl, $C_{1-12}$ heteroalkyl, or cyclic $C_{7-12}$ heteroarylalkyl, or a group of the formula -C(=$R^e$)- wherein $R^e$ is a divalent $C_{1-12}$ hydrocarbon group. Groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene.

$X^a$ can be a $C_{1-18}$ alkylene, a $C_{3-18}$ cycloalkylene, a fused $C_{6-18}$ cycloalkylene, or a group of the formula -$B^1$-G-$B^2$- wherein $B^1$ and $B^2$ are the same or different $C_{1-6}$ alkylene and G is a $C_{3-12}$ cycloalkylidene or a $C_{6-16}$ arylene. For example, $X^a$ can be a substituted $C_{3-18}$ cycloalkylidene of formula (4)

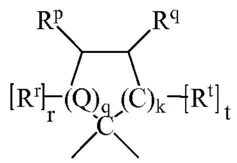

(4)

wherein $R^r$, $R^p$, $R^q$, and $R^t$ are each independently hydrogen, halogen, oxygen, or $C_{1-12}$ hydrocarbon groups; Q is a direct bond, a carbon, or a divalent oxygen, sulfur, or -N(Z)-where Z is hydrogen, halogen, hydroxy, $C_{1-12}$ alkyl, $C_{1-12}$ alkoxy, or $C_{1-12}$ acyl; r is 0 to 2, t is 1 or 2, q is 0 or 1, and k is 0 to 3, with the proviso that at least two of $R^r$, $R^p$, $R^q$, and $R^t$ taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and i is 0, the ring as shown in formula (4) contains 4 carbon atoms, when k is 2, the ring as shown in formula (4) contains 5 carbon atoms, and when k is 3, the ring contains 6 carbon atoms. Two adjacent groups (e.g., $R^q$ and $R^t$ taken together) can form an aromatic group, and $R^q$ and $R^t$ taken together can form one aromatic group and $R^r$ and $R^p$ taken together can form a second aromatic group. When $R^q$ and $R^t$ taken together form an aromatic group, $R^p$ can be a double-bonded oxygen atom, i.e., a ketone.

Bisphenols wherein $X^a$ is a cycloalkylidene of formula (4) can be used in the manufacture of polycarbonates containing phthalimidine carbonate units of formula (1a)

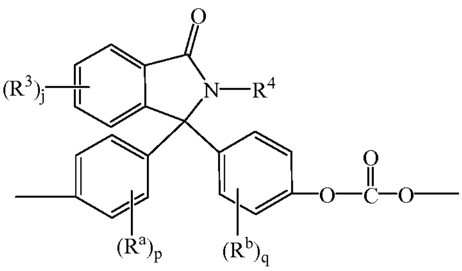

(1a)

wherein $R^a$, $R^b$, p, and q are as in formula (3), $R^3$ is each independently a $C_{1-6}$ alkyl, j is 0 to 4, and $R_4$ is hydrogen, $C_{1-6}$ alkyl, or a substituted or unsubstituted phenyl, for example, a phenyl substituted with up to five $C_{1-6}$ alkyls. For example, the phthalimidine carbonate units are of formula (1b)

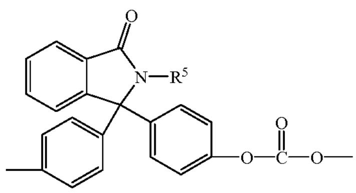

(1b)

wherein $R^5$ is hydrogen, phenyl optionally substituted with up to five 5 $C_{1-6}$ alkyls, or $C_{1-4}$ alkyl. In formula (1b), $R^5$ can be hydrogen, methyl, or phenyl, specifically, phenyl. Carbonate units (1b) wherein $R^5$ is phenyl can be derived from 2-phenyl-3,3'-bis(4-hydroxy phenyl)phthalimidine (also known as 3,3-bis(4-hydroxyphenyl)-2-phenylisoindolin-1-one, or

N-phenyl phenolphthalein bisphenol ("PPPBP")).

Other bisphenol carbonate repeating units of this type are the isatin carbonate units of formula (1c) and (1d)

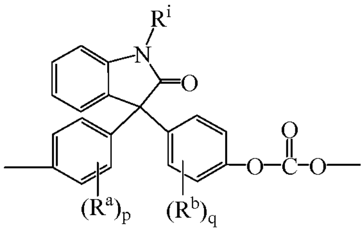
(1c)

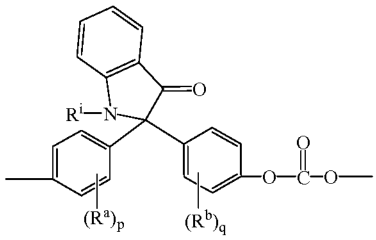
(1d)

wherein $R^a$ and $R^b$ are each independently $C_{1-12}$ alkyl, p and q are each independently 0 to 4, and $R^i$ is $C_{1-12}$ alkyl, phenyl, optionally substituted with 1 to 5 $C_{1-10}$ alkyl, or benzyl optionally substituted with 1 to 5 $C_{1-10}$ alkyl. Each $R^a$ and $R^b$ can be methyl, p and q can each independently be 0 or 1, and $R^i$ is $C_{1-4}$ alkyl or phenyl.

Other examples of bisphenol carbonate units derived from bisphenols (3) wherein $X^a$ is a substituted or unsubstituted $C_{3-18}$ cycloalkylidene (4) include the cyclohexylidene-bridged, alkyl-substituted bisphenol of formula (1e)

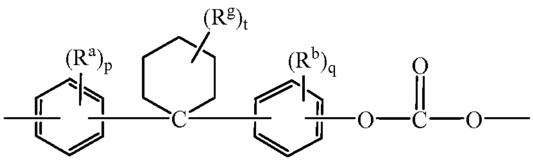
(1e)

wherein $R^a$ and $R^b$ are each independently $C_{1-12}$ alkyl, $R^g$ is $C_{1-12}$ alkyl, p and q are each independently 0 to 4, and t is 0 to 10. At least one of each of $R^a$ and $R^b$ can be disposed meta to the cyclohexylidene bridging group. Each $R^a$ and $R^b$ can independently be $C_{1-4}$ alkyl, $R^g$ is $C_{1-4}$ alkyl, p and q are each 0 or 1, and t is 0 to 5. $R^a$, $R^b$, and $R^g$ can each be methyl, p and q can each be 0 or 1, and t can be 0 or 3, or 0.

Examples of other bisphenol carbonate units derived from bisphenol (3) wherein $X^a$ is a substituted or unsubstituted $C_{3-18}$ cycloalkylidene include adamantyl units of formula (If) and fluorenyl units of formula (1g)

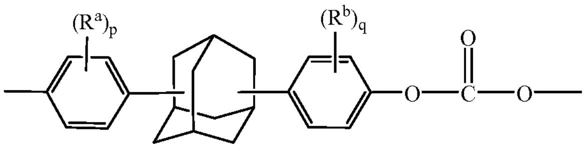
(1f)

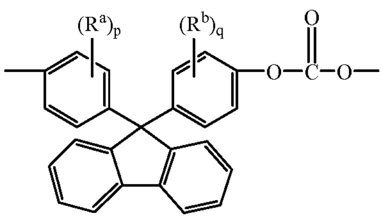
(1g)

wherein $R^a$ and $R^b$ are each independently $C_{1-12}$ alkyl, and p and q are each independently 1 to 4. At least one of each of $R^a$ and $R^b$ can be disposed meta to the cycloalkylidene bridging group. $R^a$ and $R^b$ can each be independently $C_{1-3}$ alkyl, and p and q can each be 0 or 1; specifically, $R^a$, $R^b$ can each be methyl, p and q are each 0 or 1, and when p and q are 1, the methyl group can be disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-$R^1$-OH include aromatic dihydroxy compounds of formula (6)

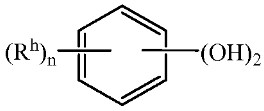
(6)

wherein each $R^h$ is independently a halogen atom, $C_{1-10}$ hydrocarbyl group such as a $C_{1-10}$ alkyl, a halogen-substituted $C_{1-10}$ alkyl, a $C_{6-10}$ aryl, or a halogen-substituted $C_{6-10}$ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. The polycarbonate can be a linear homopolymer derived from bisphenol A, in which each of $A^1$ and $A^2$ is p-phenylene and $Y^1$ is isopropylidene in formula (3).

The polycarbonate herein is prepared via the melt polymerization of a dihydroxy compound and a carbonate precursor, for example, via the melt polymerization of bisphenol A and diphenyl carbonate. Exemplary carbonate precursors include a carbonyl halide such as carbonyl bromide or carbonyl chloride (phosgene) a bishaloformate of a dihydroxy compound (e.g., the bischloroformate of bisphenol A, hydroquinone ethylene glycol, neopentyl glycol, or the like), and diaryl carbonates. Combinations comprising at least one of the foregoing types of carbonate precursors can also be used. The diaryl carbonate ester can be diphenyl carbonate, or an activated diphenyl carbonate having electron-withdrawing substituents on each aryl, such as bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing. The diaryl carbonate ester (also referred to herein as the carbonate precursor) can be free of an activated diphenyl carbonate having electron-withdrawing substituents on each aryl. For example, the diaryl carbonate ester can be free of bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, and bis(4-acetylphenyl) carboxylate. The diaryl carbonate ester can be free of bis(methyl salicyl)carbonate. As used herein, "can be free of' refers to none of the compounds being added in the melt polymerization, for example, less than or equal to 10 ppm, for example, 0 ppm of the compound being present.

In the melt polymerization method, the polycarbonate can be prepared by reacting, in a molten state, a dihydroxy compound and a carbonate precursor in the presence of a transesterification catalyst including the ionic catalyst. The reaction can be carried out in typical polymerization equipment, such as a continuously stirred reactor (CSTR), plug flow reactor, wire wetting fall polymerizers, free fall polymerizers, horizontal polymerizers, wiped film polymerizers, BANBURY mixers, single or twin screw extruders, or a combination comprising one or more of the foregoing. Volatile monohydric phenol is removed from the molten reactants by distillation and the polymer is isolated as a molten residue. Melt polymerization can be conducted as a batch process or as a continuous process. In either case, the melt polymerization conditions used can comprise two or more distinct reaction stages.

For example, the polymerization can comprise an oligomerization stage in which the starting dihydroxy compound and a carbonate precursor such as a diaryl carbonate are converted into an oligomeric polycarbonate and a second reaction stage also referred to as a polymerization stage wherein the oligomeric polycarbonate formed in the

oligomerization stage is converted to high molecular weight polycarbonate. The oligomerization stage can comprise 1 or more, or 2 or more, or 2 to 4 oligomerization units (for example, 2 to 4 continuously stirred tanks). When 2 or more oligomerization units are present in series, one or both of an increase in temperature and a decrease in pressure can occur from one unit to the next. The polymerization stage can comprise 1 or more, or 2 or more, or 2 polymerization units (for example, 2 horizontal or wire wetting fall polymerizers). The polymerization stage can comprise one or more polymerization units that can polymerize the polycarbonate to a number average molecular weight (Mn) using a polycarbonate standard of, for example, 20,000 to 50,000 Daltons. After formation of a polycarbonate, the polycarbonate composition can then be optionally quenched and devolatilized in a devolatization unit, where the Mn of the polycarbonate does not significantly increase (for example, the Mn does not increase by greater than 10 weight percent (wt%)) and a temperature, a pressure, and a residence time are used to reduce the concentration of low Mn components (such as those with an Mn of less than 1,000 Daltons). The oligomerization unit is herein defined as a oligomerization unit that results in polycarbonates oligomers with an Mn of less than or equal to 8,000 Daltons and a polymerization unit is herein defined as a polymerization unit that produces polycarbonate with a number average molecular weight of greater than 8,000 Daltons. It is noted that while less than or equal to 8,000 Daltons is used here to define a molecular weight achieved in the oligomerization stage, one skilled in the art readily understands that said molecular weight is used to define an oligomerization stage, where the oligomer molecular weight could be greater than 8,000 Daltons. A "staged" polymerization reaction condition can be used in continuous polymerization systems, wherein the starting monomers are oligomerized in a first reaction unit and the oligomeric polycarbonate formed therein is continuously transferred to one or more downstream reactors in which the oligomeric polycarbonate is converted to high molecular weight polycarbonate. Typically, in the oligomerization stage the oligomeric polycarbonate produced has a number average molecular weight of 1,000 to 7,500 Daltons. In one or more subsequent polymerization stages the number average molecular weight of the polycarbonate can be increased to, for example, 8,000 and 25,000 Daltons (using polycarbonate standard), or 13,000 to 18,000 Daltons.

Typically, solvents are not used in the process, and the reactants, the dihydroxy compound, and the carbonate precursor are in a molten state. The reaction temperature can be 100 to 350 degrees Celsius (°C), or 180 to 310°C. The pressure can be at atmospheric pressure, supra-atmospheric pressure, or a range of pressures from atmospheric pressure to 15 torr in the initial stages of the reaction, and at a reduced pressure at later stages, for example, 0.2 to 15 torr. Likewise, the polymerization can occur in a series of polymerization units that can each individually have increasing temperature and/or vacuum. For example, an oligomerization stage can occur at a temperature of 100 to 280°C, or 140 to 240°C and a polymerization stage can occur at a temperature of 240 to 350°C, or 280 to 300°C, or 240 to 270°C, or 250 to 310°C, where the temperature in the polymerization stage is greater than the temperature in the oligomerization stage. The reaction time from the initial oligomerization unit to the final polymerization unit is generally 0.1 to 15 hours (hr). A final polymerization unit as used herein refers to a final polymerization unit in the melt polymerization where the last increase in molecular weight occurs. For example, the quenching agent can be added to the polycarbonate resin after a final polymerization unit (e.g., after a point where the weight average molecular weight based on polystyrene standard (Mw) of the polycarbonate resin will increase by less than or equal to 10%), and optionally, before any melt filtering.

Likewise, an oligomerization can occur at a pressure of greater than or equal to 10 kiloPascals absolute (kPa(a)) or the oligomerization can comprise at least two oligomerization units where a first oligomerization unit can have a pressure of greater than or equal to 10 kPa(a) and a second oligomerization can have a pressure of 1.5 to 9 kPa(a), where the first oligomerization unit is upstream of the second oligomerization unit, where one or more oligomerization units can be located before, in between, or after said polymerization units.

The polymerization stage following the oligomerization stage can comprise polymerizing in one or two polymerization units. The first polymerization unit can be at a temperature of 240 to 350°C, or 260 to 310°C and a pressure of 0.1 to 1 kPa(a). The second polymerization unit can be at a temperature of 240 to 350°C, or 260 to 300°C and a pressure of less than or equal to 0.5 kPa(a). The polycarbonate can be devolatized after a final polymerization. A final polymerization as used herein refers to the polymerization where the last increase in molecular weight occurs. For example, after the final polymerization, the Mw of the polycarbonate increases by less than or equal to 10%.

After a final polymerization unit, the polymer can be introduced to a reactor, extruded, subjected to filtration in a melt filter, or a combination comprising one or more of the foregoing. It is noted that the melt filter can be located before or after the extruder. For example, the melt polymerization process for the manufacture of a polycarbonate composition can comprise: melt polymerizing a dihydroxy compound and a carbonate precursor to produce a molten reaction product; quenching the molten reaction product; filtering the molten reaction product in a melt filter upstream of any extruders; optionally, introducing an additive to form a mixture; and extruding the mixture to form the polycarbonate composition. Likewise, the melt polymerization process for the manufacture of a polycarbonate composition can comprise: melt polymerizing a polycarbonate; introducing a quencher composition and optionally an additive to form a mixture; and extruding the mixture to form the polycarbonate composition.

The polycarbonate can be, for example, a bisphenol A polycarbonate with a Mw based on a polystyrene standard

of 21,800 Daltons with a melt flow of 24 to 32 grams per 10 minutes (g/10 min) (ASTM D1238-04, 300°C, 2.16 kilogram (kg)).

The polycarbonate can have a melt flow of 4 to 40 g/10 min, for example, 4.5 to 15 g/10 min or 15 to 35 g/10 min as determined by ASTM D1238-04 at 300°C, 1.5 kg. The polycarbonate can have a melt flow of 5 to 15 g/10 min as determined by ASTM D1238-04 at 250°C, 1.5 kg.

Catalysts used in the melt transesterification polymerization production of polycarbonates can include the ionic catalyst, an optional quaternary catalyst, and an optional alkali catalyst comprising a source of one or both of alkali ions and alkaline earth ions.

The ionic catalyst comprises a compound of the formula I

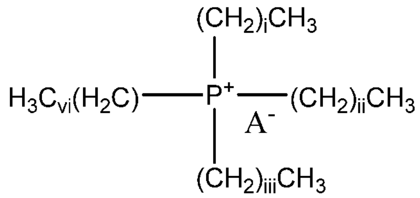

(I)

wherein i + ii + iii + iv is greater than or equal to 16, or 16 to 50, or 20 to 35 and wherein i is greater than or equal to ii + 2, or greater than or equal to ii + 5, or greater than or equal to ii + 8, or greater than or equal to ii + 2 and less than or equal to ii + 20. In formula I, i can be 8 to 20, or 8 to 12. In formula I, ii can be 6 to 10. In formula I, ii, iii, and iv can be the same or different; or ii and iii can be the same and i and iv can be the same. In formula I, i can be equal to iv and ii can be equal to iii. In formula I, iii and iv can be equal to i.

The anion $A^-$ can comprise, for example, a halide (such as chorine or bromine), a hydroxide, an alkyl, an aryl, a dialkyl, a phosphate (such as a fluorophosphate), a phosphinate (such as an alkyl phosphinate), an alkyl tosylate, a cyanamide, an alkyl sulfate, an amide group, a carboxylate, a sulphate, a borate, an alkyl ester, or a combination comprising at least one of the foregoing. The anion can include tetrafluoroborate, dicyanamide, bis(trifluoromethanesulfonyl)amide, tosylate, carboxylate, phosphinate, dialkylphosphate, alkylsulfate, hexafluorophosphate, bis(2,4,4-trimethylpentyl) phosphinate, acetate, hydroxide, benzoate, formate, propionate, butyrate, phenolate, bistriflimide, phenoxide, or a combination comprising at least one of the foregoing. The ionic catalyst can comprise a tributyl hexadecyl phosphonium catalyst, a trihexyl butyl phosphonium catalyst, a trihexyl tetradecyl phosphonium catalyst, a tetraoctyl phosphonium catalyst, a tetradecyl trihexyl phosphonium catalyst, or a combination comprising at least one of the foregoing. The ionic catalyst can comprise a trihexyl tetradecyl phosphonium such as trihexyl tetradecyl phosphonium tetradecanoate (TDPD), trihexyl tetradecyl phosphonium 2,4,4-trimethylpentyl phosphinate (TDPP), or a combination comprising at least one of the foregoing.

The amount of the ionic catalyst can be added based upon the total number of moles of dihydroxy compound employed in the polymerization reaction. When referring to the ratio of the ionic catalyst to all dihydroxy compounds employed in the polymerization reaction, it is convenient to refer to moles of the ionic catalyst per mole of the dihydroxy compound(s), meaning the number of moles of the ionic catalyst divided by the sum of the moles of each individual dihydroxy compound present in the reaction mixture. The amount of the ionic catalyst can be employed in an amount of 1 to 80, or 2 to 50, or 3 to 12, or 5 to 9 micromoles per total mole of the dihydroxy compound.

The ionic catalyst can be an ionic liquid, for example, comprising the ions in a liquid state. In some instances, the ionic liquid will not decompose or vaporize when melted.

The catalyst can optionally comprise a quaternary catalyst. The quaternary catalyst comprises a quaternary ammonium compound, a quaternary phosphonium compound other than the ionic catalyst, or a combination comprising at least one of the foregoing. The quaternary ammonium compound can be a compound of the structure $(R^4)_4N^+X^-$, wherein each $R^4$ is the same or different, and is a $C_{1-20}$ alkyl, a $C_{4-20}$ cycloalkyl, or a $C_{4-20}$ aryl; and $X^-$ is an organic or inorganic anion, for example, a hydroxide, halide, carboxylate, sulfonate, sulfate, formate, carbonate, or bicarbonate. Examples of organic quaternary ammonium compounds include tetramethyl ammonium hydroxide, tetrabutyl ammonium hydroxide, tetramethyl ammonium acetate, tetramethyl ammonium formate, tetrabutyl ammonium acetate, and combinations comprising at least one of the foregoing.

The quaternary phosphonium compound can be a compound of the structure $(R^5)_4P^+X^-$, wherein each $R^5$ is the same or different, and is a $C_{1-20}$ alkyl, a $C_{4-20}$ cycloalkyl, or a $C_{4-20}$ aryl; and $X^-$ is an organic or inorganic anion, for example, a hydroxide, phenoxide, halide, carboxylate such as acetate or formate, sulfonate, sulfate, formate, carbonate, or bicarbonate. Where $X^-$ is a polyvalent anion such as carbonate or sulfate, it is understood that the positive and negative charges in the quaternary ammonium and phosphonium structures are properly balanced. For example, where $R^{20}$ to $R^{23}$ are each methyls and $X^-$ is carbonate, it is understood that $X^-$ represents $2(CO_3^{-2})$.

Examples of organic quaternary phosphonium compounds include tetramethyl phosphonium hydroxide, tetramethyl phosphonium acetate, tetramethyl phosphonium formate, tetrabutyl phosphonium hydroxide, tetraethyl phosphonium acetate, tetrapropyl phosphonium acetate, tetrabutyl phosphonium acetate (TBPA), tetrapentyl phosphonium acetate, tetrahexyl phosphonium acetate, tetraheptyl phosphonium acetate, tetraoctyl phosphonium acetate, tetradecyl phosphonium acetate, tetradodecyl phosphonium acetate, tetratolyl phosphonium acetate, tetramethyl phosphonium benzoate, tetraethyl phosphonium benzoate, tetrapropyl phosphonium benzoate, tetraphenyl phosphonium benzoate, tetraethyl phosphonium formate, tetrapropyl phosphonium formate, tetraphenyl phosphonium formate, tetramethyl phosphonium propionate, tetraethyl phosphonium propionate, tetrapropyl phosphonium propionate, tetramethyl phosphonium butyrate, tetraethyl phosphonium butyrate, and tetrapropyl phosphonium butyrate, tetraphenyl phosphonium acetate (TPPA), tetraphenyl phosphonium phenoxide (TPPP), and combinations comprising at least one of the foregoing. The quaternary catalyst can comprise tetrabutyl phosphonium acetate, TPPP, TPPA, or a combination comprising at least one of the foregoing.

The amount of the optional quaternary catalyst can be added based upon the total number of moles of dihydroxy compound employed in the polymerization reaction. When referring to the ratio of catalyst, for example, phosphonium salt, to all dihydroxy compounds employed in the polymerization reaction, it is convenient to refer to moles of phosphonium salt per mole of the dihydroxy compound(s), meaning the number of moles of phosphonium salt divided by the sum of the moles of each individual dihydroxy compound present in the reaction mixture. The amount of the optional quaternary catalyst (e.g., organic ammonium or phosphonium salts) can each independently be employed in an amount of $1 \times 10^{-2}$ to $1 \times 10^{-5}$, or $1 \times 10^{-3}$ to $1 \times 10^{-4}$ moles per total mole of the dihydroxy compounds in the monomer mixture.

The melt polymerization can be performed in the absence of the quaternary catalyst. The melt polymerization can be free of a quaternary catalyst addition step. When a quaternary catalyst is added, the quaternary catalyst can be added to a monomer mixing unit and/or an oligomerization unit.

The catalyst can comprise an alkali catalyst that is typically more thermally stable than the quaternary catalyst, and therefore can be used throughout transesterification, including during oligomerization, and after oligomerization, e.g., in the polymerization units, during polymerization. The alkali catalyst can be added to a polymerization at any stage in the polymerization, for example, upstream of, and/or directly to, and/or after a monomer mixing unit; and/or upstream of, and/or directly to, and/or after a polymerization unit (for example, to a first stage polymerization unit and/or the second reaction stage polymerization unit). Likewise, the catalyst addition process can be free of an alkali catalyst addition step.

The melt polymerization can be performed in the absence of the alkali catalyst. The melt polymerization can be free of an alkali catalyst addition step. When an alkali catalyst is added, the alkali catalyst can be added to an oligomerization unit. When an alkali catalyst is added, the alkali catalyst can be added to a polymerization unit.

The alkali catalyst comprises a source of one or both of alkali ions and alkaline earth ions. The sources of these ions include alkaline earth hydroxides such as magnesium hydroxide and calcium hydroxide. Sources of alkali metal ions can include the alkali metal hydroxides such as illustrated by lithium hydroxide, sodium hydroxide, potassium hydroxide, and combinations comprising at least one of the foregoing. Examples of alkaline earth metal hydroxides are calcium hydroxide, magnesium hydroxide, and combinations comprising at least one of the foregoing. The alkali catalyst can comprise sodium hydroxide. Other possible sources of alkaline earth and alkali metal ions include salts of carboxylic acids (such as sodium acetate) and derivatives of ethylene diamine tetraacetic acid (EDTA) (such as EDTA tetrasodium salt, and EDTA magnesium disodium salt), as well as combinations comprising at least one of the foregoing. For example, the alkali catalyst can comprise alkali metal salt(s) of a carboxylic acid, alkaline earth metal salt(s) of a carboxylic acid, or a combination comprising at least one of the foregoing. In another example, the alkali catalyst comprises $Na_2Mg$ EDTA or a salt thereof.

The alkali catalyst can also, or alternatively, comprise salt(s) of a non-volatile inorganic acid. For example, the alkali catalyst can comprise salt(s) of a non-volatile inorganic acid such as $NaH_2PO_3$, $NaH_2PO_4$, $Na_2HPO_3$, $KH_2PO_4$, $CsH_2PO_4$, $Cs_2HPO_4$, and combinations comprising at least one of the foregoing. Alternatively, or in addition, the alkali catalyst can comprise mixed alkali metal salt(s) of phosphoric acid, such as $NaKHPO_4$, $CsNaHPO_4$, $CsKHPO_4$, and combinations comprising at least one of the foregoing. The alkali catalyst can comprise $KNaHPO_4$, wherein a molar ratio of Na to K is 0.5 to 2.

The alkali catalyst typically can be used in an amount sufficient to provide $1 \times 10^{-2}$ to $1 \times 10^{-8}$ moles, or $1 \times 10^{-4}$ to $1 \times 10^{-7}$ moles of metal hydroxide per mole of the dihydroxy compound.

The ionic catalyst can comprise a reduced concentration of sodium, for example, of less than or equal to 2,000 ppm of sodium, or less than or equal to 1,675 ppm of sodium, or less than or equal to 500 ppm of sodium, or less than or equal to 100 ppm of sodium, or less than or equal to 30 ppm of sodium based on the total weight of the ionic catalyst. For example, the ionic catalyst can comprise sodium sulfate and the amount of sodium can be less than or equal to 1,690 ppm, or less than or equal to 1,670 ppm based on the total weight of the ionic catalyst.

The optional quaternary catalyst can also have a reduced concentration of alkali metal salts. For example, the reduced concentration can be one or more of: a) less than or equal to 2,000 ppm of sodium, or less than or equal to 1,675 ppm of sodium, or less than or equal to 500 ppm of sodium, or less than or equal to 100 ppm of sodium, or less than or equal to 30 ppm of sodium; b) less than or equal to 500 ppm of cesium, or less than or equal to 300 ppm of

cesium, or less than or equal to 135 ppm of cesium; and c) less than or equal to 100 ppm of potassium, or less than or equal to 45 ppm of potassium; based on the total weight of the quaternary catalyst.

The ionic catalyst, a dihydroxy compound, and a carbonate precursor can be added to a monomer mixing unit located upstream of an oligomerization unit to form a catalyst mixture. The method of adding the ionic catalyst can comprise adding a dihydroxy compound, a carbonate precursor, and the ionic catalyst to form the catalyst mixture in any order. The adding can be performed in an inert atmosphere, for example, under nitrogen and/or argon. As used herein, an inert atmosphere refers to a gaseous atmosphere, wherein the gaseous atmosphere is unreactive with the components in the mixture. If present, the quaternary catalyst can be added in the same or different step as adding the ionic catalyst.

The ionic catalyst can be added as a liquid phase ionic catalyst. The liquid phase ionic catalyst can comprise 5 to 100 wt%, or 25 to 100 wt%, 70 to 100 wt%, or 100 wt% of the ionic catalyst. The liquid phase ionic catalyst can consist of the ionic catalyst. The liquid phase ionic catalyst can comprise a solvent such as phenol, toluene, or a combination comprising at least one of the foregoing. The ionic catalyst can be heated to a temperature greater than the melting point and then added to the monomer mixture. The melting point of the ionic catalyst can be 20 to 120°C, or 25 to 70°C.

The monomer mixing unit can be at atmospheric pressure. The monomer mixing unit can be maintained at a temperature of 100 to 250°C, or 150 to 200°C, or 165 to 185°C.

The dihydroxy compound and the carbonate precursor in the catalyst mixture can be present in a molar ratio of 0.5:1 to 1.5:1, or 0.9:1 to 1.1:1, or 0.99:1 to 1.01:1.

The catalyst mixture can comprise less than or equal to 500 ppm of one or both of water and an alkyl alcohol based on the total weight of the catalyst mixture, for example, arising from one or more of the dihydroxy compound, the carbonate precursor, and the atmosphere in the monomer mixing unit. The water and/or the alkyl alcohol level can be reduced prior to adding the ionic catalyst.

The water and/or an alkyl alcohol level can be reduced in one or more reducing steps prior to adding the ionic catalyst. The reducing the water and/or the alkyl alcohol level can be accomplished by maintaining a temperature and pressure in the monomer mixing unit above the boiling point of water and/or an alkyl alcohol for an amount of time to reduce the water and/or an alkyl alcohol level. For example, the reducing the water level at atmospheric pressure can be accomplished by maintaining a temperature in the monomer mixing unit of greater than or equal to 100°C for an amount of time to reduce the water level. The temperature in the monomer mixing unit can be 100 to 250°C, or 150 to 200°C, or 165 to 185°C.

If added, an alkali catalyst can be added downstream of the catalyst mixture. For example, the alkali catalyst can be added to the first oligomerization unit. The alkali catalyst can be added to a second oligomerization unit. The alkali catalyst can be added to a polymerization unit. The alkali catalyst can be added only downstream of an oligomerization unit. The alkali catalyst can be added at a pressure of greater than or equal to 10 kPa(a) or 1.5 to 9 kPa(a). The alkali catalyst can be added at a temperature of 100 to 280°C, or 140 to 240°C. The alkali catalyst can be added to an oligomerization unit at a pressure of greater than or equal to 10 kPa(a) or 1.5 to 9 kPa(a). The alkali catalyst can be added to an oligomerization unit at a temperature of 100 to 280°C, or 140 to 240°C. The alkali catalyst can be added to a polycarbonate oligomer with a number average molecular weight of 600 to 7,500 Daltons, or 800 to 2,000 Daltons using polycarbonate standards.

The polycarbonate can have an endcapping ratio of 20 to 80%, or 40 to 65%. As used herein, the endcapping ratio in percent (%EC) is determined by the following equation:

$$\%EC = 100 - \left(\frac{ppmOH + Mn}{340{,}000}\right)$$

wherein *ppmOH* is the amount of hydroxyl end groups in ppm and *Mn* is the number averaged molecular weight based on polycarbonate standards in Daltons. The *ppmOH* can be determined by Fourier Transform Infrared Spectroscopy (FTIR), for example, on a Perkin Elmer FTIR Spectrum One Device by dissolving 0.5 grams (g) of the polycarbonate sample in 25 milliliters (mL) of dried chloroform, measuring the absorbance at a wavelength of 3,584 inverse centimeters ($cm^{-1}$) using a univariable calibration, and normalizing the absorbance by dividing the absorbance by the absorbance at 2,779 $cm^{1}$.

FIG. 1 illustrates a melt polycarbonate polymerization system. Dihydroxy reactant A, carbonate precursor B, and ionic catalyst C are added to monomer mixing unit 10 to form a catalyst mixture. The monomer mixing unit 10 can be maintained at 160 to 180°C and atmospheric pressure. The catalyst mixture and additional carbonate precursor B, where the additional carbonate precursor B can be the same or different as that added to the monomer mixing unit, is sent to first oligomerization unit 20. First oligomerization unit 20 can operate at a temperature of 230 to 260°C and a vacuum of 14 to 20 kPa(a) and phenol byproduct from polymerization reaction is removed. The mixture then flows into

second oligomerization unit 21 that can operate at a higher temperature of 270 to 290°C and a deeper vacuum of 3 to 5 kPa(a), e.g., for further phenol removal. The oligomer, as formed in the oligomerization unit 21, then flows to first polymerization unit 30 that can operate at a temperature of 290 to 315°C and 1 to 0.25 kPa(a). The effluent from first polymerization unit 30 can be directed to second polymerization unit 31 that can operate at 290 to 315°C and 0.05 to 0.15 kPa(a) to result in the formation of a molten polycarbonate. It is noted that phenol byproduct E and any solvent can be removed, for example, by a scrubber 50, from oligomerization unit 20, 21 and/or from polymerization unit 30, 31. It is noted that while FIG. 1 illustrates polymerization units 30, 31 to be horizontal polymerization units, polymerization units 30 and 31 can likewise each independently be, for example, a wire wetting fall polymerization unit or a continuously stirred tank.

The polycarbonate then flows to extruder 40 where optional quencher H and additive I are added to the molten polycarbonate. Extruder 40 can be a twin-screw extruder and at least one of the components can be incorporated into the composition by feeding directly into extruder 40 at the throat and/or downstream of the throat through, for example, a sidestuffer. Additive I can also be compounded into a masterbatch with a desired polymeric resin and fed into extruder 40. After extruder 40, the resulting polycarbonate is pumped through melt filter 60 that can be a stainless steel filter and that has a 2.5 to 50 micrometer, or a 10 to 40 micrometer, or a 15 to 30 micrometer mesh size, e.g., to remove gels and other impurities from polycarbonate J. The product can then be stranded in a die-head and finally pelletized and packaged. The pellets, so prepared, when cutting the extrudate can be, for example, one-fourth inch long or less as desired. Such pellets can be used for subsequent molding, shaping, or forming. Typical nominal throughput per line can range from 30 to 20,000 tons/hour.

The polymerization process can comprise a section of parallel polymerization, where parallel polymerization refers to the splitting of a polycarbonate stream into two or more streams that may or may not experience the same polymerization conditions thereafter (i.e., they can attain different molecular weights, have different additives added thereto, etc.). For example, polycarbonate can be prepared in a first portion of the polymerization process; a stream comprising polycarbonate can be split into two or more streams and directed to 2 or more parallel operating lines.

A quencher composition can be added at one or more locations in the present melt preparation of the polycarbonate, for example, to reduce the activity of ionic catalyst or the optional alkali catalyst. The quencher composition comprises a quenching agent (also referred to herein as a quencher). Conversely, the melt polymerization can occur in the absence of an alkali catalyst and can therefore be free of a quencher.

The quenching agent can comprise a sulfonic acid ester such as an alkyl sulfonic ester of the formula $R_1SO_3R_2$ wherein $R_1$ is hydrogen, $C_1$-$C_{12}$ alkyl, $C_6$-$C_{18}$ aryl, or $C_7$-$C_{19}$ alkylaryl, and $R_2$ is $C_1$-$C_{12}$ alkyl, $C_6$-$C_{18}$ aryl, or $C_7$-$C_{19}$ alkylaryl. Examples of alkyl sulfonic esters include benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p- toluenesulfonate. The sulfonic acid ester can comprise alkyl tosylates such as n-butyl tosylate. The sulfonic acid ester can be present in the quencher composition in an amount of 0.1 to 10 volume percent (vol%), or 0.1 to 5 vol%, or 0.5 to 2 vol% based on the total volume of the quencher composition.

The quenching agent can comprise boric acid esters (e.g., $B(OCH_3)_3$, $B(OCH_2CH_3)_3$, and $B(OC_6H_6)_3$), zinc borate, boron phosphate, aluminum stearate, aluminum silicate, zirconium carbonate, zirconium $C_1$-$C_{12}$ alkoxides, zirconium hydroxycarboxylates, gallium phosphide, gallium antimonide, germanium oxide, $C_1$-$C_{32}$ organogermanium compounds, $C_4$-$C_{32}$ tetraorganotin tin compound, $C_6$-$C_{32}$ hexaorganotin compound (e.g., $[(C_6H_6O)Sn(CH_2CH_2CH_2CH_3)_2]_2O$), $Sb_2O_3$, antimony oxide, $C_1$-$C_{32}$ alkylantimony, bismuth oxide, $C_1$-$C_{12}$ alkylbismuth, zinc acetate, zinc stearate, $C_1$-$C_{32}$ alkoxytitanium, and titanium oxide, phosphoric acid, phosphorous acid, hypophosphorous acid, pyrophosphoric acid, polyphosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, formic acid, acetic acid, citric acid, glutamic acid, salicylic acid, nicotinic acid, fumaric acid, maleic acid, oxalic acid, benzenesulfinic acid, $C_1$-$C_{12}$ dialkyl sulfates (e.g., dimethyl sulfate and dibutyl sulfate), sulfonic acid phosphonium salts of the formula $(R^aSO_3^-)(PR^b_4)^+$ wherein $R^a$ is hydrogen, $C_1$-$C_{12}$ alkyl, $C_6$-$C_{18}$ aryl, or $C_7$-$C_{19}$ alkylaryl, and each $R^b$ is independently hydrogen, $C_1$-$C_{12}$ alkyl or $C_6$-$C_{18}$ aryl, sulfonic acid derivatives of the formula $A^1$-$(Y^1$-$SO_3X^1)_m$ wherein $A^1$ is a $C_1$-$C_{40}$ hydrocarbon group having a valence of m, $Y^1$ is a single bond or an oxygen atom, $X^1$ is a secondary or tertiary alkyl group of the formula $-CR^{15}R^{16}R^{17}$, a metal cation of one equivalent, an ammonium cation (e.g., $NR^b_3{}^+$ wherein each $R^b$ is independently hydrogen, $C_1$-$C_{12}$ alkyl or $C_6$-$C_{18}$ aryl), or a phosphonium (e.g., $PR^b_4{}^+$ wherein each $R^b$ is independently hydrogen, $C_1$-$C_{12}$ alkyl or $C_6$-$C_{18}$ aryl) wherein $R^{15}$ is a hydrogen atom or an alkyl group having 1 to 5 carbon atoms, $R^{16}$ is a hydrogen atom, a phenyl group or an alky group having 1 to 5 carbon atoms, and $R^{17}$ is the same as or different from $R^{15}$ and has the same definition as $R^{15}$, provided that two of $R^{15}$, $R^{16}$, and $R^{17}$ cannot be hydrogen atoms, and m is an integer of 1 to 4, provided that when $Y^1$ is a single bond, all of $X^1$ in an amount of m cannot be metal cations of one equivalent, a compound of the formula $^+X^2$-$A^2$-$Y^1$-$SO_3^-$ wherein $A^2$ is a divalent hydrocarbon group, $^+X^2$ is a secondary, tertiary or quaternary ammonium cation or a secondary (e.g., tertiary or quaternary phosphonium cation, and $Y^1$ is a single bond or an oxygen atom, a compound of the formula $A^3$-$(^+X^3)_n \cdot (R$-$Y^1$-$SO_3^-)_n$ wherein $A^3$ is a $C_1$-$C_{40}$ hydrocarbon group having a valence of n, $^+X^3$

is a secondary, tertiary or quaternary ammonium cation (e.g., $NR^b{}_3{}^+$ wherein each $R^b$ is independently hydrogen, $C_1$-$C_{12}$ alkyl or $C_6$-$C_{18}$ aryl), or a secondary, tertiary or quaternary phosphonium cation (e.g., $PR^b{}_4{}^+$ wherein each $R^b$ is independently hydrogen, $C_1$-$C_{12}$ alkyl or $C_6$-$C_{18}$ aryl), R is a monovalent $C_1$-$C_{40}$ hydrocarbon group, n is an integer of 2 to 4, and $Y^1$ is a single bond or an oxygen atom, a compound of the formula $A^5$-$Ad^1$-$A^4$-$(Ad^2$-$A^5)_\ell$ wherein $A^5$ is a monovalent or divalent $C_1$-$C_{40}$ hydrocarbon group, $A^4$ is a divalent $C_1$-$C_{40}$ hydrocarbon group, each of $Ad^1$ and $Ad^2$ is independently an acid anhydride group selected from $-SO_2$-O-$SO_2$-, $-SO_2$-O-CO- and -CO-O-$SO_2$-, and $\ell$ is 0 or 1, provided that when $\ell$ is O, $-(Ad^2$-$A^5)_\ell$ is a hydrogen atom or a bond between $A^4$ and $A^5$, in which $A^5$ is a divalent hydrocarbon group or a single bond, aminosulfonic esters having the formula $R_aR_bN$-A-$SO_3R_c$, wherein $R_a$ and $R_b$ are each independently hydrogen, $C_1$-$C_{12}$ alkyl, $C_6$-$C_{22}$ aryl, $C_7$-$C_{19}$ alkylaryl or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), $R_c$ is hydrogen, and A is $C_1$-$C_{12}$ alkyl, $C_6$-$C_{18}$ aryl, or $C_{17}$-$C_{19}$ alkylaryl (e.g., compounds such as N-(2-hydroxyethyl) piperazine-N'-3-propanesulfonic acid, 1,4,-piperazinebis (ethanesulfonic acid), and 5-dimethylamino-1-napthalenesulfonic acid), ammonium sulfonic esters of the formula $R_aR_bRN^+$-A-$SO_3^-$, wherein $R_a$, $R_b$, are each independently hydrogen, $C_1$-$C_{12}$ alkyl, $C_1$-$C_{12}$ aryl, $C_7$-$C_{19}$ alkylaryl, or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), $R_c$ is a hydrogen, and A is $C_1$-$C_{12}$ alkyl, $C_6$-$C_{18}$ aryl, or $C_7$-$C_{19}$ alkylaryl, sulfonated polystyrene, methyl acrylate-sulfonated styrene copolymer, or a combination comprising at least one of the foregoing.

An additive can further be added at one or more locations in the present melt preparation of the polycarbonate. For example, the additive can be added upstream of a polymerization unit, directly into a polymerization unit (for example, at an inlet, in a side feeder, in an outlet, or a combination comprising one or more of the foregoing), downstream of a polymerization unit, in a reactor that is not polymerizing polycarbonate, upstream of an extruder, directly into an extruder (for example, at the throat of the extruder, in a side feeder, in an outlet, or a combination comprising one or more of the foregoing), downstream of an extruder, or a combination comprising one or more of the foregoing. The additive can be added as part of the quencher composition or can be added separately. The additive can be added in a molten state or can be added after an extruded polycarbonate is re-melted. The additive can be filtered prior to being added into the polymerization unit.

The additive can comprise, for example, an impact modifier, a flow modifier, a filler (e.g., a particulate polytetrafluoroethylene (PTFE), glass, carbon, a mineral, or metal), a reinforcing agent (e.g., glass fibers), an antioxidant, a heat stabilizer, a light stabilizer, an ultraviolet (UV) agent (such as a UV light stabilizer and a UV absorbing additive), a plasticizer, a lubricant, a release agent (such as a mold release agent (such as glycerol monostearate, pentaerythritol stearate, glycerol tristearate, and stearyl stearate)), an antistatic agent, an antifog agent, an antimicrobial agent, a colorant (e.g., a dye or pigment), a surface effect additive, a radiation stabilizer, a flame retardant, an anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the polymerized composition.

The following examples are provided to illustrate articles with enhanced thermal capability. The examples are merely illustrative and are not intended to limit devices made in accordance with the disclosure to the materials, conditions, or process parameters set forth therein.

## Examples

### Example 1: Reaction of DPC and BPA in the presence of TDPD

A three neck round bottom glass flask was passivated with hydrochloric acid for 24 hours and rinsed with Millipore water to remove any sodium present in the glass flask. The glass flask was put in a water bath set at 180°C and BPA and DPC were charged into the glass flask in a molar ratio of BPA to DPC of 1:1.08. Once, the temperature of the monomer mixture reached 150°C, stirring was started using a magnetic stir bar rotating at 250 revolutions per minute (rpm). The temperature of the monomer mixture was maintained at a temperature of 170°C using a thermocouple present in the glass flask. Once the monomer mixture reached 170°C, a sample was taken and then TDPD was added. 100 to 150 milligram reaction samples were then taken throughout the course of the reaction using a glass syringe. The reaction samples were diluted in 25 milliliters of acetonitrile and the diluted samples were analyzed for DPC (circles), BPA (squares), and phenol (triangles) using HPLC. Results are illustrated in FIG. 2.

FIG. 2 illustrates that TDPD was catalytically active, promoting the condensation reaction.

Examples 2-5: Polycarbonate polymerization in the presence of TDPD

Two melt polymerizations were performed in three stages in a batch reactor. The first stage was at a temperature of 180°C and a pressure of 915 mmHg for a reaction time of 1 hr; the second stage was at a temperature of 230°C and a pressure of 170 mmHg for a reaction time of 1 hr; and the third stage was at a temperature of 270°C and a pressure of 20 mmHg for a reaction time of 1 hr. The BPA, DPC, and the catalyst were added in the first stage at a molar ratio of BPA to DPC to 1:1.08 and a molar concentration of $1.5 \times 10^{-4}$ moles of catalyst per 1 mole of BPA. In Example 2, TDPD was used and in Example 3, TBPA was used.

Two further experiments were performed using TDPD. In Example 4, the reaction conditions of Example 2 were used except that a fourth stage was added, where the fourth stage was at a temperature of 290°C and a pressure of 0 mmHg for a reaction time of 1 hr. In Example 5, the reaction conditions of Example 4 were used except that a fifth stage was added, where the fifth stage was at a temperature of 290°C and a pressure of 0 mmHg for a reaction time of 1 hr.

Table 1

| Example | 2 | 3 | 4 | 5 |
|---|---|---|---|---|
| Catalyst | TDPD | TBPA | TDPD | TDPD |
| $MW_{PS}$ (kDa) | 11 | 4.3 | 28 | 39.5 |
| Endcap (%) | 55 | - | 55 | 62 |
| Branching (ppm) | - | - | 698 | 1016 |

Table 1 illustrates that a higher molecular weight was achieved when TDPD was used as compared to the TBPA catalyst, where TDPD resulted in a MW of 11 kilodaltons (kDa) of Example 2 as compared to the molecular weight of Example 3 of only 4.3 kDa. Without being bound by theory, it is believed that the increased molecular weight of Example 2 arises from the longer lifetime of TDPD in the polymerization as compared to that of TBPA. Table 1 further illustrates that increased molecular weights were achieved of 28 and 39.5 kDa in Examples 4 and 5, respectively, using TDPD.

Examples 6-10: Polycarbonate polymerization of TDPP

Polycarbonate samples were prepared using the reaction conditions of Example 5, except that the catalyst was varied according to Table 2, where ueq stands for catalyst microequivalents per mole of BPA.

Table 2

| Example | 6 | 7 | 8 | 9 | 10 |
|---|---|---|---|---|---|
| TDPP (ueq) | - | 5 | 7* | 40 | 7 |
| TBPA (ueq) | 50 | 25 | - | - | - |
| TPPP (ueq) | - | - | 40 | - | - |
| $KNaHPO_4$ (ppbNa) | 30 | - | - | 30 | - |
| $MW_{PS}$ (kDa) | 57.3 | 52.8 | 53.7 | 54.5 | 56.3 |
| Endcap (%) | 65.1 | 65.3 | 75.2 | 73.4 | 64.7 |
| *TDPP was added in the third stage | | | | | |

Table 2 shows that polycarbonate polymerized using TDPP had comparable molecular weights.

Examples 11-14: Branching formation

Melt polymerizations were performed using multiple stages in a batch melt reactor. The first stage was a temperature of 180°C and a pressure of 915 mmHg for a reaction time of 1 hr, the second stage was at a temperature of 230°C and a pressure of 170 mmHg for a reaction time of 1 hr, the third stage was at a temperature of 270°C and a pressure of 20 mmHg for a reaction time of 1 hr, the fourth stage was at a temperature of 290°C and a pressure of 0.5

mmHg for a reaction time of 1 hr, and the fifth stage was at a temperature of 300°C and a pressure of 0.1 mmHg for a reaction time of 1 hr. The BPA, DPC, and the catalyst were added in the first stage at a molar ratio of BPA to DPC to 1:1.08 and a molar concentration of $1.5x10^{-4}$ moles of catalyst per 1 mole of BPA. In Example 11 TPPA was used, in Example 12 TDPD was used, in Example 13 Bmim-OAc was used, and in Example 14 TDPP was used. The molecular weight buildup and branching formation in stages 3-5 is illustrated in FIG. 3 and FIG. 4, respectively, and the formula of Bmim-OAc is

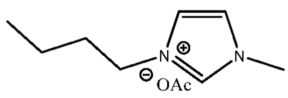
.

FIG. 3 and FIG. 4 show that the polycarbonate prepared using TDPP has a reduced branching at a similar build-up of molecular weight as compared to polycarbonates prepared using TDPD under the same polymerization conditions.

Set forth below are non-limiting embodiments of the present disclosure.

Embodiment 1: A process of melt polymerizing a polycarbonate, comprising: melt polymerizing a dihydroxy compound and a carbonate precursor to form the polycarbonate in the presence of a catalyst comprising an ionic catalyst (such as an ionic liquid catalyst) of the formula I:

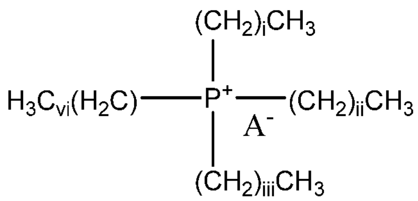
(I)

wherein i + ii + iii + iv is greater than or equal to 16, or 16 to 50, or 20 to 35; i is greater than or equal to ii + 2; and A is an anion.

Embodiment 2: The process of Embodiment 1, wherein the melt polymerizing comprises: forming a catalyst mixture in a mixing unit, wherein the catalyst mixture comprises the dihydroxy compound, the carbonate precursor, and the ionic catalyst; adding the catalyst mixture to an oligomerization unit and forming an oligomer; and adding the oligomer to a polymerization unit to form the polycarbonate.

Embodiment 3: The process of any one of the preceding embodiments, wherein the ionic catalyst comprises a tributyl hexadecyl phosphonium catalyst, a trihexyl butyl phosphonium catalyst, a trihexyl tetradecyl phosphonium catalyst, a tetraoctyl phosphonium catalyst, a tetradecyl trihexyl phosphonium catalyst, or a combination comprising at least one of the foregoing.

Embodiment 4: The process of any one of the preceding embodiments, wherein the ionic catalyst comprises adding a trihexyl tetradecyl phosphonium catalyst, preferably, the trihexyl tetradecyl phosphonium catalyst comprises trihexyl tetradecyl phosphonium tetradecanoate (TDPD), trihexyltetradecyl phosphonium 2,4,4-trimethylpentyl phosphinate (TDPP), or a combination comprising at least one of the foregoing.

Embodiment 5: The process of any one of the preceding embodiments, wherein the ionic catalyst comprises adding 1 to 80, or 3 to 12, or 5 to 9 micromoles of the ionic catalyst per total mole of the dihydroxy compound.

Embodiment 6: The process of any one of the preceding embodiments, wherein the catalyst further comprises a quaternary catalyst.

Embodiment 7: The process of any one of the preceding embodiments, wherein the catalyst comprises an alkali catalyst comprising a source of alkali and/or alkaline earth metal compounds.

Embodiment 8: The process of Embodiment 7, wherein the alkali catalyst is added to a polymerization unit.

Embodiment 9: The process of any one of Embodiments 1 to 5, wherein the catalyst consists of the ionic catalyst and the process is free of adding an alkali catalyst comprising a source of alkali and/or alkaline earth metal compounds and is free of adding a quaternary catalyst. For example, the ionic catalyst can be the only catalyst present in the melt polymerizing.

Embodiment 10: The process of Embodiment 9, wherein the alkali catalyst comprises NaOH, $NaH_2PO_3$, $NaH_2PO_4$, $Na_2HPO_3$, $KH_2PO_4$, $CsH_2PO_4$, $Cs_2HPO_4$, $NaKHPO_4$, $CsNaHPO_4$, $CsKHPO_4$, or a combination comprising at least one of the foregoing.

Embodiment 11: The process of any one of the preceding embodiments, wherein the process is free of adding a

quencher.

Embodiment 12: The process of any one of the preceding embodiments, wherein the ionic catalyst comprises less than or equal to 2,000 ppm of sodium based on the total weight of the ionic catalyst.

Embodiment 13: The process of any one of the preceding embodiments, wherein i is or greater than or equal to ii + 5.

Embodiment 14: The process of any one of the preceding embodiments, wherein i is or greater than or equal to ii + 8.

Embodiment 15: The process of any one of the preceding embodiments, wherein i is or less than or equal to ii + 20.

Embodiment 16: The process of any one of the preceding embodiments, wherein ii, iii, and iv are equal to each other.

Embodiment 17: The process of any one of Embodiments 1 to 15, wherein i is equal to iv; and ii is equal to iii.

Embodiment 18: The process of any one of Embodiments 1 to 15, wherein ii, iii, and iv are different.

Embodiment 19: The process of any one of Embodiments 1 to 15, wherein iii, iv are equal to i.

Embodiment 20: The process of any one of the preceding embodiments, wherein i is 8 to 20.

Embodiment 21: The process of any one of the preceding embodiments, wherein ii is 6 to 10.

Embodiment 22: The process of any one of the preceding embodiments, wherein the dihydroxy compound comprises bisphenol A and the carbonate precursory comprises diphenyl carbonate.

Embodiment 23: A polycarbonate formed from the process of any of the preceding embodiments.

Embodiment 24: Use of an ionic catalyst of formula I of any of the preceding embodiments in a melt polymerization reaction of polycarbonate.

While the disclosure has been described with reference to an exemplary embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

In general, the disclosure can alternately comprise, consist of, or consist essentially of, any appropriate components herein disclosed. The disclosure can additionally, or alternatively, be formulated so as to be devoid, or substantially free, of any components, materials, ingredients, adjuvants or species used in the prior art compositions or that are otherwise not necessary to the achievement of the function and/or objectives of the present disclosure.

The terms "a" and "an" do not denote a limitation of quantity, but rather denote the presence of at least one of the referenced item. The term "or" means "and/or" unless clearly indicated otherwise by context. Reference throughout the specification to "an embodiment", "another embodiment", "some embodiments", and so forth, means that a particular element (e.g., feature, structure, step, or characteristic) described in connection with the embodiment is included in at least one embodiment described herein, and may or may not be present in other embodiments. In addition, it is to be understood that the described elements may be combined in any suitable manner in the various embodiments. "Optional" or "optionally" means that the subsequently described event or circumstance may or may not occur, and that the description includes instances where the event occurs and instances where it does not. The term "combination" is inclusive of blends, mixtures, alloys, reaction products, and the like.

Unless specified to the contrary herein, all test standards are the most recent standard in effect as of the filing date of this application, or, if priority is claimed, the filing date of the earliest priority application in which the test standard appears.

The endpoints of all ranges directed to the same component or property are inclusive of the endpoints, are independently combinable, and include all intermediate points and ranges. For example, ranges of "up to 25 wt%, or 5 to 20 wt%" is inclusive of the endpoints and all intermediate values of the ranges of "5 to 25 wt%," such as 10 to 23 wt%, etc.

Unless defined otherwise, technical and scientific terms used herein have the same meaning as is commonly understood by one of skill in the art to which this invention belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

When a group containing a specified number of carbon atoms is substituted with any of the groups listed in the preceding paragraph, the number of carbon atoms in the resulting "substituted" group is defined as the sum of the carbon atoms contained in the original (unsubstituted) group and the carbon atoms (if any) contained in the substituent. For example, when the term "substituted Ci-io alkyl" refers to a Ci-io alkyl group substituted with $C_{6-12}$ aryl group, the total number of carbon atoms in the resulting aryl-substituted alkyl group is $C_{7-22}$.

## Claims

1. A process of melt polymerizing a polycarbonate, comprising:
melt polymerizing a dihydroxy compound and a carbonate precursor to form the polycarbonate in the presence of a catalyst comprising an ionic catalyst of the formula I:

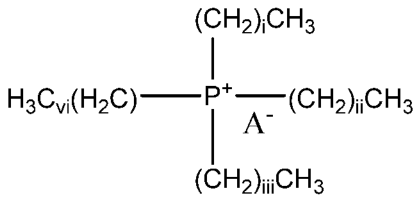

(I)

wherein i + ii + iii + iv is greater than or equal to 16, or 16 to 50, or 20 to 35; i is greater than or equal to ii + 2; and A is an anion.

2. The process of Claim 1, wherein the melt polymerizing comprises:

    forming a catalyst mixture in a mixing unit, wherein the catalyst mixture comprises the dihydroxy compound, the carbonate precursor, and the ionic catalyst;
    adding the catalyst mixture to an oligomerization unit and forming an oligomer; and
    adding the oligomer to a polymerization unit to form the polycarbonate.

3. The process of any one of the preceding claims, wherein the ionic catalyst comprises a tributyl hexadecyl phosphonium catalyst, a trihexyl butyl phosphonium catalyst, a trihexyl tetradecyl phosphonium catalyst, a tetraoctyl phosphonium catalyst, a tetradecyl trihexyl phosphonium catalyst, or a combination comprising at least one of the foregoing.

4. The process of any one of the preceding claims, wherein the ionic catalyst comprises adding a trihexyl tetradecyl phosphonium catalyst, preferably, the trihexyl tetradecyl phosphonium catalyst comprises trihexyl tetradecyl phosphonium tetradecanoate (TDPD), trihexyltetradecyl phosphonium 2,4,4-trimethylpentyl phosphinate (TDPP), or a combination comprising at least one of the foregoing.

5. The process of any one of the preceding claims, wherein the ionic catalyst comprises adding 1 to 80, or 3 to 12, or 5 to 9 micromoles of the ionic catalyst per total mole of the dihydroxy compound.

6. The process of any one of the preceding claims, wherein the catalyst further comprises a quaternary catalyst.

7. The process of any one of the preceding claims, wherein the catalyst further comprises an alkali catalyst comprising a source of alkali and/or alkaline earth metal compounds.

8. The process of Claim 7, wherein the alkali catalyst is added to a polymerization unit.

9. The process of any one of Claims 1 to 5, wherein the catalyst consists of the ionic catalyst.

10. The process of any one of the preceding claims, wherein the process is free of adding a quencher.

11. The process of any one of the preceding claims, wherein i is or greater than or equal to ii + 5.

12. A polycarbonate formed from the process of any of the preceding claims.

13. Use of an ionic catalyst of formula I in a melt polymerization reaction of polycarbonate.

## Patentansprüche

1. Verfahren zur Schmelzpolymerisation eines Polycarbonats, umfassend:

Schmelzpolymerisation einer Dihydroxyverbindung und eines Carbonatvorläufers zur Bildung des Polycarbonats in Gegenwart eines Katalysators, umfassend einen ionischen Katalysator der Formel I:

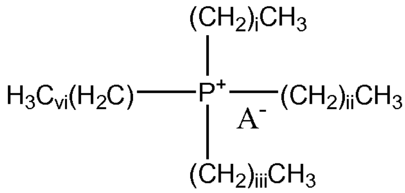

(I)

wobei i + ii + iii + iv größer oder gleich 16, oder 16 bis 50, oder 20 bis 35 ist; i größer oder gleich ii + 2 ist; und A ein Anion ist.

**2.** Verfahren nach Anspruch 1, wobei die Schmelzpolymerisation umfasst:

Bilden einer Katalysatormischung in einer Mischeinheit, wobei die Katalysatormischung die Dihydroxyverbindung, den Carbonatvorläufer und den ionischen Katalysator umfasst;
hinzufügen der Katalysatormischung zu einer Oligomerisierungseinheit und Bildung eines Oligomers; und
hinzufügen des Oligomers zu einer Polymerisationseinheit, um das Polycarbonat zu bilden.

**3.** Verfahren nach einem der vorhergehenden Ansprüche, wobei der ionische Katalysator einen Tributylhexadecylphosphoniumkatalysator, einen Trihexylbutylphosphoniumkatalysator, einen Trihexyltetradecylphosphoniumkatalysator, einen Tetraoctylphosphoniumkatalysator, einen Tetradecyltrihexylphosphoniumkatalysator oder eine Kombination, die mindestens einen der vorhergehenden umfasst, umfasst.

**4.** Verfahren nach einem der vorhergehenden Ansprüche, wobei der ionische Katalysator das Hinzufügen eines Trihexyltetradecylphosphoniumkatalysators umfasst, vorzugsweise der Trihexyltetradecylphosphoniumkatalysator Trihexyltetradecylphosphoniumtetradecanoat (TDPD), Trihexyltetradecylphosphonium 2,4,4-trimethylpentylphosphinat (TDPP) oder eine Kombination, umfassend mindestens eines der vorgenannten.

**5.** Verfahren nach einem der vorhergehenden Ansprüche, wobei der ionische Katalysator die Zugabe von 1 bis 80 oder 3 bis 12 oder 5 bis 9 Mikromol des ionischen Katalysators pro Gesamtmol der Dihydroxyverbindung umfasst.

**6.** Verfahren nach einem der vorhergehenden Ansprüche, wobei der Katalysator ferner einen quartären Katalysator umfasst.

**7.** Verfahren nach einem der vorhergehenden Ansprüche, wobei der Katalysator ferner einen Alkalikatalysator umfasst, umfassend eine Quelle von Alkali- und/oder Erdalkalimetallverbindungen.

**8.** Verfahren nach Anspruch 7, wobei der Alkalikatalysator zu einer Polymerisationseinheit hinzugefügt wird.

**9.** Verfahren nach einem der Ansprüche 1 bis 5, wobei der Katalysator aus dem ionischen Katalysator besteht.

**10.** Verfahren nach einem der vorhergehenden Ansprüche, wobei das Verfahren frei von der Zugabe eines Quenchers ist.

**11.** Verfahren nach einem der vorhergehenden Ansprüche, wobei i gleich oder größer als ii + 5 ist.

**12.** Ein Polycarbonat, gebildet aus dem Verfahren eines der vorhergehenden Ansprüche.

**13.** Verwendung eines ionischen Katalysators der Formel I in einer Schmelzpolymerisationsreaktion von Polycarbonat.

## Revendications

**1.** Procédé de polymérisation à l'état fondu d'un polycarbonate, comprenant :
la polymérisation à l'état fondu d'un composé dihydroxy et d'un précurseur de carbonate pour former le polycarbonate

en présence d'un catalyseur comprenant un catalyseur ionique de formule I :

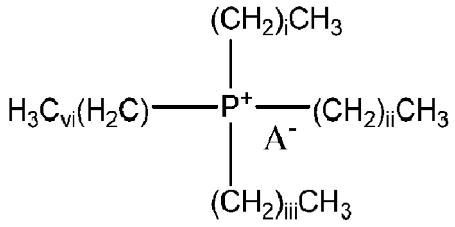

(I)

dans laquelle la somme i + ii + iii + iv est supérieure ou égale à 16, ou de 16 à 50, ou de 20 à 35 ; i est supérieur ou égal à ii + 2 ; et A est un anion.

2. Procédé selon la revendication 1, dans lequel la polymérisation à l'état fondu comprend :

   la formation d'un mélange de catalyseur dans une unité de mélange, lequel mélange de catalyseur comprend le composé dihydroxy, le précurseur de carbonate, et le catalyseur ionique ;
   l'addition du mélange de catalyseur à une unité d'oligomérisation et la formation d'un oligomère ; et
   l'addition de l'oligomère à une unité de polymérisation pour former le polycarbonate.

3. Procédé selon l'une quelconque des revendications précédentes, dans lequel le catalyseur ionique comprend un catalyseur tributyl-hexadécyl-phosphonium, un catalyseur trihexyl-butyl-phosphonium, un catalyseur trihexyl-tétradécyl-phosphonium, un catalyseur tétraoctyl-phosphonium, un catalyseur tétradécyl-trihexyl-phosphonium, ou une combinaison comprenant au moins l'un des précédents.

4. Procédé selon l'une quelconque des revendications précédentes, dans lequel le catalyseur ionique comprend l'addition d'un catalyseur trihexyl-tétradécyl-phosphonium, de préférence le catalyseur trihexyl-tétradécyl-phosphonium comprend du tétradécanoate de trihexyl-tétradécyl-phosphonium (TDPD), du 2,4,4-triméthylpentyl-phosphinate de trihexyltétradécyl-phosphonium (TDPP), ou une combinaison comprenant au moins l'un des précédents.

5. Procédé selon l'une quelconque des revendications précédentes, dans lequel le catalyseur ionique comprend l'addition de 1 à 80, ou de 3 à 12, ou de 5 à 9 micromoles du catalyseur ionique par mole totale du composé dihydroxy.

6. Procédé selon l'une quelconque des revendications précédentes, dans lequel le catalyseur comprend en outre un catalyseur quaternaire.

7. Procédé selon l'une quelconque des revendications précédentes, dans lequel le catalyseur comprend en outre un catalyseur alcalin comprenant une source de composés de métal alcalin et/ou alcalino-terreux.

8. Procédé selon la revendication 7, dans lequel le catalyseur alcalin est ajouté à une unité de polymérisation.

9. Procédé selon l'une quelconque des revendications 1 à 5, dans lequel le catalyseur consiste en le catalyseur ionique.

10. Procédé selon l'une quelconque des revendications précédentes, lequel procédé est exempt de l'addition d'un agent d'inactivation.

11. Procédé selon l'une quelconque des revendications précédentes, dans lequel i est supérieur ou égal à ii + 5.

12. Polycarbonate formé par le procédé de l'une quelconque des revendications précédentes.

13. Utilisation d'un catalyseur ionique de formule I dans une réaction de polymérisation à l'état fondu de polycarbonate.

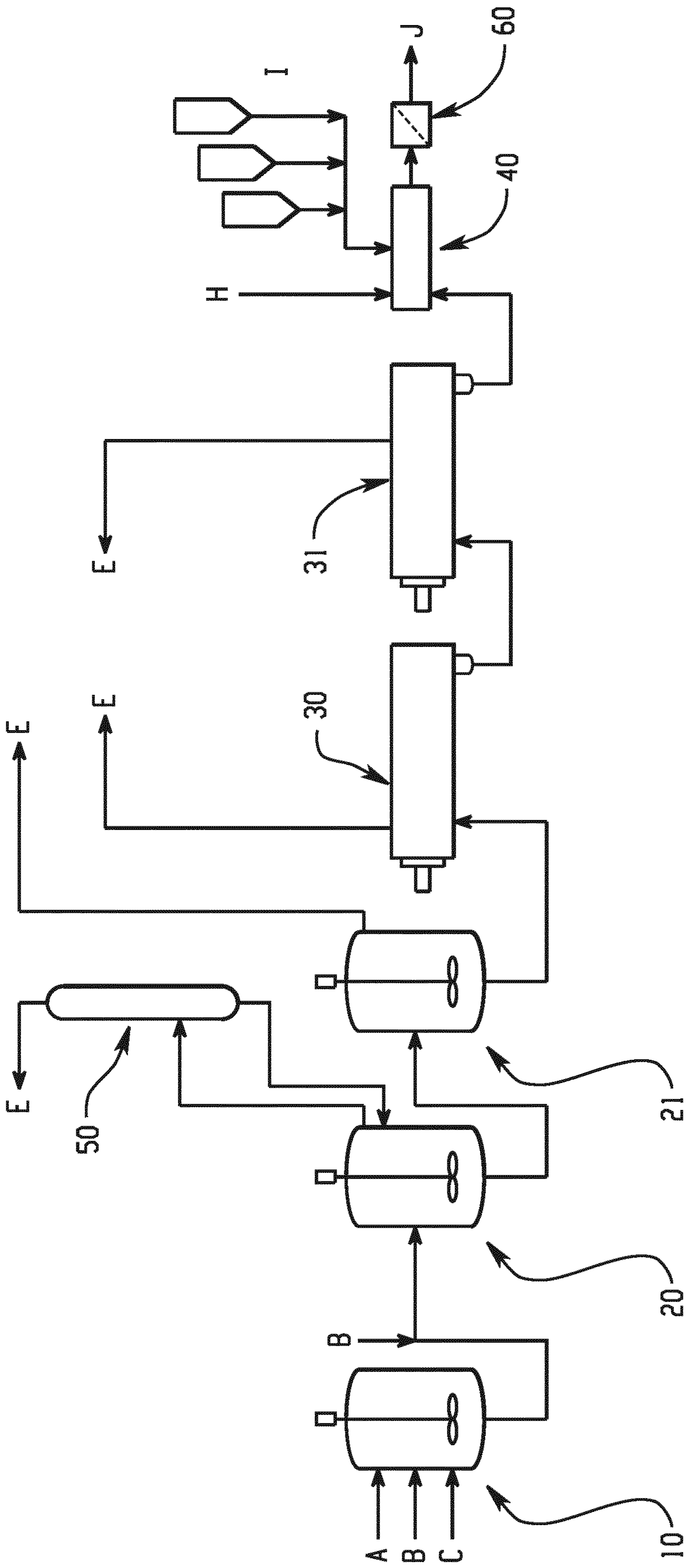


Fig. 1

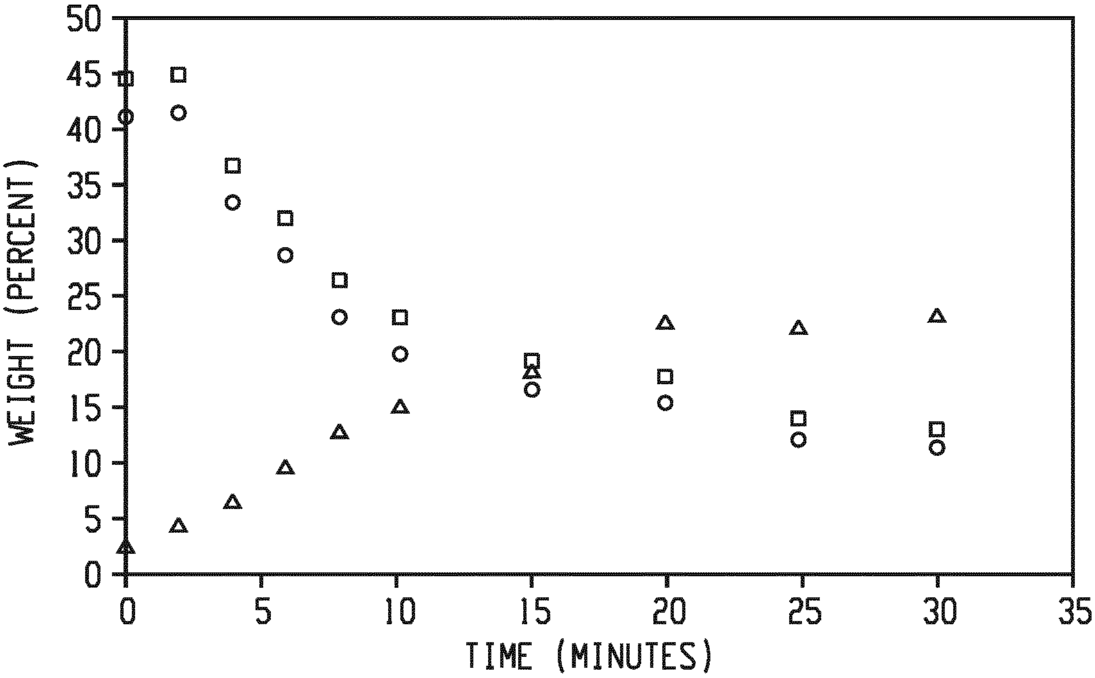
50
45
40
35
30
25
20
15
10
5
0
WEIGHT (PERCENT)
0
5
10
15
20
25
30
35
TIME (MINUTES)

Fig. 2

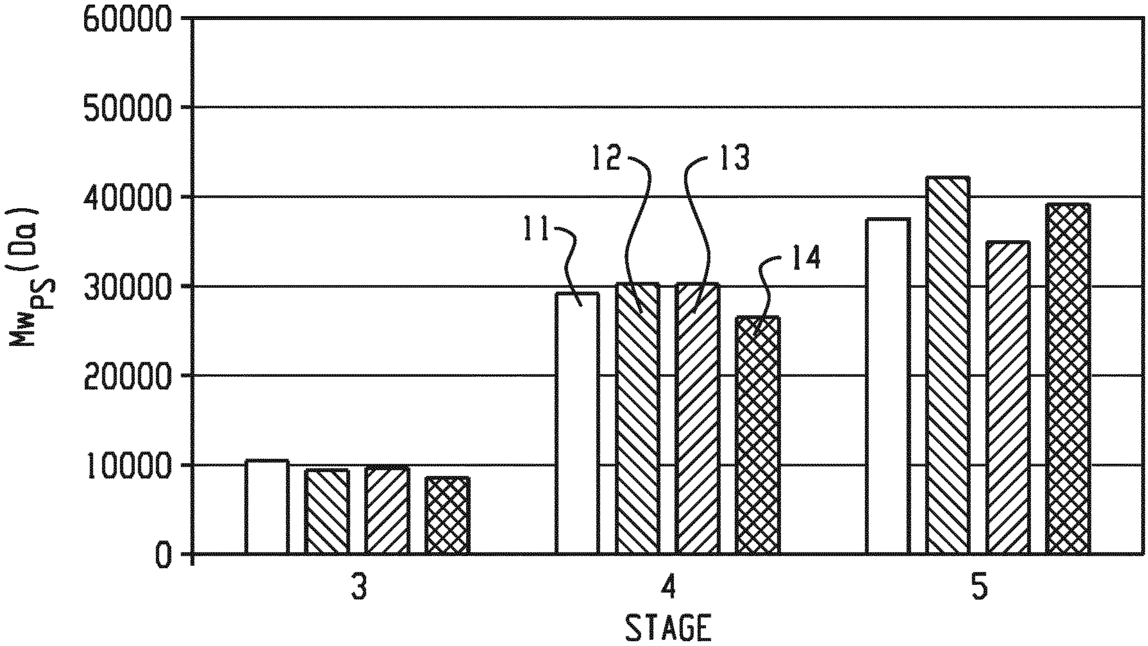
60000
50000
40000
30000
20000
10000
0
$Mw_{PS}$ (Da)
11
12
13
14
3
4
5
STAGE

*Fig. 3*

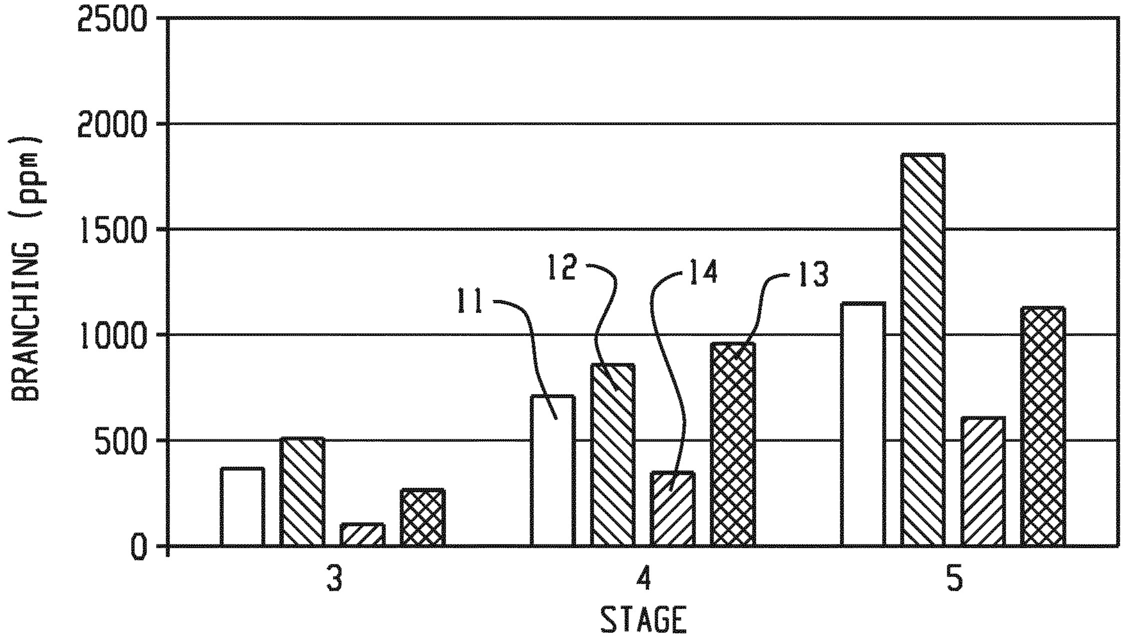
2500
2000
1500
1000
500
0
BRANCHING (ppm)
11
12
14
13
3
4
5
STAGE

*Fig. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016151517 A